# EUROPEAN PATENT APPLICATION

(11) **EP 2 651 088 A1**
(43) Date of publication of application: **16.10.2013**
(21) Application number: 11846093.0
(22) Date of filing: 09.12.2011
(51) Int. Cl.: H04L 29/06, H04L 29/08, H04L 29/12

(54) **NETWORK LAYER PROTOCOL FOR REPLACING IPV6**

(30) Priority: 09.12.2010 CN 201010582838
(71) Applicant: Tan, Zhongfei, Heilongjiang 164156 (CN); Tsao, Roger Huazhe, San Jose, CA 95124 (US)
(72) Inventor: Tan, Zhongfei, Heilongjiang 164156 (CN); Tsao, Roger Huazhe, San Jose, CA 95124 (US)
(74) Representative: Dennemeyer & Associates S.A.
(86) International application number: PCT/CN2011/002057
(87) International publication number: WO 2012/075688

(57) **Abstract**

A new network layer protocol with IPv4 compatibility is proposed. Use the existing Internet as the prototype to build Network Blocks of the same size. Expand the Internet address space by adding Network Blocks. The main ideas of this new protocol are: assign an identifying IP address, called Block Address, to each Network Block; connect each pair of the Network Blocks with a special gateway called Super Gateway; deliver data packets to their destination Network Blocks through Super Routing, which is a cooperation process of Super Gateways. The internet expanded using this protocol will be center-less, with its top level made of equal-footing Network Blocks. The existing internet will naturally become one of the Network Blocks which can be called the Old Block. Newly built Network Blocks will be connected seamlessly to the Old Block without changing the routing network; users of new Network Blocks will be able to visit the websites in the Old Block, thereby avoiding the IPv6 transition deadlock.

## Description

### Technology Field

This invention is a method for expanding the IP address space of the Internet.

### Technology Background

The Internet has led an incredible information revolution that has changed this world significantly in less than 30 years, going far beyond the expectations of its original designers. The seemingly forever-abundant 32-bit IP address pool has been largely hoarded up by 2011. The whole world will soon fall into an inevitable IP address shortage, maybe with the United States being the only exception, but not for long, either.

The IPv6 protocol that IETF suggested in 1998 promises a gigantic number of IP addresses, but is totally incompatible with the IPv4 protocol upon which the current Internet is based. In the past 15 years, IPv6 has been worked on tirelessly by network experts all over the world; but it still cannot be commercially deployed as of today. This deadlock, being mostly due to the difficulty in seamless connection between IPv6 and IPv4 networks, has been affecting some of the Internet development front lines. As the cradle of the Internet, the United States currently owns enough IP addresses (as of May 2011, the U.S. had 45% of all allocated IP addresses, or 5 per capita); this fact effectively ensures no real IPv6 deployment in maybe another 10 years, or until the U.S. also run out of IP addresses.

In IETF's "Request for Comments" RFC1385 published in 1992, an experimental scheme named EIP was proposed for expanding the IP address space. In that scheme, the Internet was to be divided into multiple 32-bit network regions each identified by a "network number" similar to telephone area code. The perception of this scheme was to do "in situ division" to the existing Internet and then use border routers to link the post-division network segments, passing packets between the network segments through address translation. Another valuable idea proposed in RFC1385 is creating a new IPv4 option to store the "network number" to avoid breaking the framework of the IPv4 protocol.

A 1997 patent application in China (CN200710073741.2) proposed another scheme expanding the Internet by creating 32-bit "primary IP address regions" and using stacked 32-bit IP addresses to distinguish different "primary IP address regions". (This is equivalent to adding multiple level 32-bit "network numbers" to the RFC1385 scheme.) Unfortunately, the rest part of the proposed scheme was not reasonable. For example, instead of using IPv4 options, the scheme requires changing transportation layer protocol IDs and thereby destroyed the compatibility with the current Internet.

In this patent application, we propose a new scheme using part of RFC1385 and Chinese Patent Application CN200710073741.2 as prior-arts. Adopting the ideas including "network regions", using new IPv4 option, and stacking IP addresses, we seek to expand IP address space by doing the least change to the Internet without breaking the compatibility with IPv4. In order to keep using IPv4 hardware, keep using the current routing system, and do the least changes to network software, the current addressing system and the 32-bit IP address is to be preserved. This can only be done by creating new 32-bit network "replications" using the current Internet as the prototype. We use a new name "Network Block" to name these "replications" for two reasons: first, RFC 13 85 did not formally name the "network regions" that it proposed; second, the "Network Block" that we propose here, although similar to the "primary IP address region" in CN200710073741.2, has a significantly different prominence in the post-expansion Internet: the latter is meant to be a "leaf" in a tree-like structure with the current Internet serving as the "root"; while our perception of the expanded Internet will consist of layers of inter-connected Network Blocks on equal footing, with the current Internet being one of the many Network Blocks in the top layer. The new Internet will not have a tree-like structure that will over-load its root "by design".

This invention is a network layer (layer 3) communication protocol, which can be named "Ultra-Link Internet Protocol" (ULIP for shorthand).

In formality, ULIP is a legitimate minimal extension of the current IPv4, and does not require protocol change in any other layers of TCP/IP. The essence of ULIP is the method for connecting the Network Blocks. ULIP inherit the ideas of Network Block and new IPv4 option from RFC1385, and the idea of stacking IP addresses from Chinese Patent Application CN200710073741.2.

### Substance of the Invention

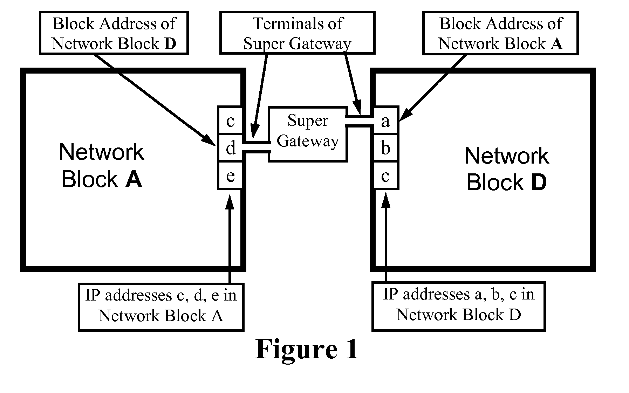

The core of this invention is made of the following methods for connecting Network Blocks:
(1) Block Address: Each Network Block is assigned a 32-bit IP address which will be the unique identifier and the entry point of the Network Block. Immediately before entering a Network Block, a data packet normally goes through the Block Address. In contrast, the entry point address of a "primary IP address region" in Chinese Patent Application CN200710073741.2 depends on the incoming direction of packets; while RFC1385 proposed expensive address translation instead of assigning the "Network Numbers" to border gateways.
Being the formal entry point, a Block address is generally determined not by the Network Block it is assigned to, but rather by other Network Blocks. A packet that starts and ends within the same Network Block will not go through the Block Address.
(2) Super Gateway: a special gateway connected between any two Network Blocks. The two ports of each Super Gateway must have different IP addresses: each of these must be the Block Address of the Network Block connected to the other port, as shown in Fig. 1. Note that a Super Gateway is very different from a "Primary Gateway" proposed in Chinese Patent Application CN200710073741.2 which has one IP address shared by the two ports.
Super Gateways' unique way of connection described above is the basis for establishing Blocks Addresses and Super Routing (to be described below).
(3) Network Block Group (shorthand: Block Group): A cluster of Network Blocks among which all Network Blocks pairs are linked by Super Gateways. The Network Blocks within a Block Group are Peer Blocks to each other. All Peer Blocks within a Block Group are on equal footing; this is why the ULIP-based Internet will not necessarily have a center.
(4) Child Block, Mother Block, and Complete Network Address (CNA): A Network Block can be connected under another one, forming a Mother Block - Child Block relationship. Two Network Blocks can have the same Block Address in the network; but one of their Mother Block Address, Grandma Block Address, etc. must be different. This ensures that every Network Block is unique within the whole network.
Borrowing the idea of "stacking IP address" in CN200710073741.2, first stacking the Block Address on top of the host address, and then adding on top the Mother Block Address, Grandma Block Address, etc. sequentially if applicable, we get the Complete Network Address (CNA) of the host. The CNA for each host is unique within the whole network. The IP addresses in a CNA are delimited by colons (:) in writing.
Each CNA is made of a number of IP addresses. If the CNAs in a Network Block have 2 IPv4 addresses, then the Network Block is called a dual-level address Network Block, or L2 Block for short. Similarly there can be L3, L4, and L5 Blocks. No "L1 Block" exists because L2 Blocks don't have a Mother Block. A L3 Block must be the Child Block of some L2 Block, and a L4 Block must be the Child Block of some L3 Block, etc.
Without altering the format of IPv4 packet header, the maximum capacity of ULIP-based Internet, excluding the Block Addresses, will be about 17 million times that of IPv6.
The Internet that we currently have will automatically become one of the L2 Blocks; we can name it the "Old Block", which may be the only Network Block shared by multiple countries; while the L2 Block Group(s) would be the highest-level structure of the ULIP-based Internet.
(5) Sister Network Block Group (shorthand: Sister Group): Network Blocks of the same level, under the same Mother Block (excepting L2 Blocks which do not have a Mother Block) can form more than one Block Groups with limited connection in between; such Block Groups are said to be Sister Groups of each other. When not all pairs of Network Blocks need direct connections to each other, splitting a bigger Block Group into Sister Groups can save the cost by removing idling Super Gateways.
Depending on needs, the ULIP Internet has the choices having a single L2 Block Group, or a number of inter-linked L2 Sister Groups. However, the Old Block is expected to be the common member of all L2 Sister Groups.
(6) ULIP Option: the new IPv4 option created for ULIP. To avoid confusion, we call the host initiating a packet the "Start Point"; the host that is the ultimate receiver of the packet the "Endpoint". In a packet traveling from one Network Block to another, the "Source Address" and the "Destination Address" in the IPv4 header are not always the Start Point address and the Endpoint address.
The ULIP Option is used to store Block Addresses and host addresses of the Start Point and Endpoint of a packet, and other information, as shown in Table 1. This option helps to enable users of new Network Blocks visiting the Old Block without breaking the current system of Internet protocols. The idea of this option came from RFC1385; we improved the idea and designed the specifics to support Super Routing (defined below) and security. The ULIP option ID can be 154.

**Table 1: General Format of ULIP Option (maximum progress = option length÷4)**

| ULIP ID = 154 | Max. Progress | 00 | Traverse Count | Progress | Reserved |
|---|---|---|---|---|---|
| Routing Security Stamp | | | | | |
| IP Address Table (number of addresses = even) | | | | | |
| 8 bit | 6 bit | 2 bit | 4 bit | 4 bit | 8 bit |

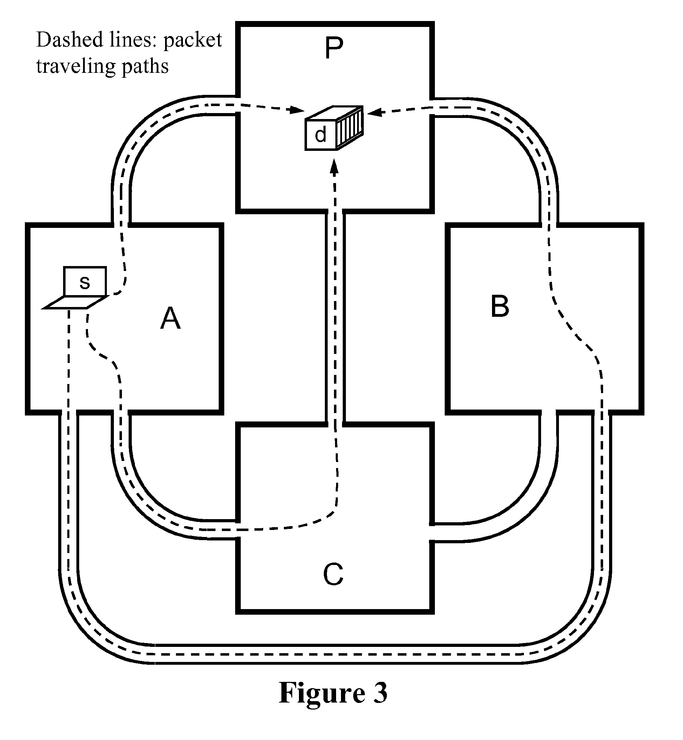

In the ULIP option, the "option length" will be multiples of 4 bytes, in which ULIP uses only the 6 higher bits of it as "maximum progress". The 4-bit "traverse count" stores the number of times a packet crossing Network Block boundaries, packets with "traverse count" overflows before reaching Endpoint are to be discarded. The 4-bit "progress" points to the next pair of IP addresses needed by Super Routing. "Progress" normally begins with initial value 3, and reaches "maximum progress" when the packet reaches the Network Block containing the Endpoint. There are 8 bits reserved for future upgrading.
The rationale that the ULIP option works in IPv4 network is based on the rules set up in the current Internet standard RFC 1122 "Requirements for Internet Hosts" that unrecognized IP options must be "silently ignored" (refer to Section 3.2.1.8 in RFC1122).
Based on the above-mentioned mechanisms, the ULIP option can also be transplanted for other usages, such as creating super-large private networks. For another example, the difficulty in establishing seamless connection between IPv4 and IPv6 is mainly due to the fact that there is no "hiding place" for an IPv6 address in the IPv4 header. If we store an IPv6 address inside the ULIP option, then IPv6 users will be able to visit IPv4 websites with the help of a border gateway (which should naturally be a Super Gateway). This means that, ULIP can be used to integrate Network Blocks using IP addresses of different lengths. In another word, IPv6 networks should be connected to ULIP-based Internet in form of Network Blocks. However, two restrictions should apply: first, the Block Address of an IPv6 Network Block must be an IPv4 address so that it can be uniquely mapped between 32-bit and 128-bit addresses; second, all IPv6 Network Blocks must be L2 Blocks. This is because the huge IPv6 capacity makes multi-level IPv6 network unnecessary, and also because in order to avoid confusion, we need to ensure that the 6-to-4 ULIP option contains at most one IPv6 address. In a network made of IPv4 and IPv6 Network Blocks, before packets enter an IPv6 Network Block, the Super Gateways uniquely map all IPv4 addresses within packet headers into IPv6 addresses as part of protocol translation. The ULIP option should be naturally transplanted into the IPv6 protocol the same way as other IPv4 options.
(7) Super Routing: the process that a data packet is sent across Network Blocks by cooperating Super Gateways.
Because of compatibility, network connections within the same Network Block can be accomplished using the current Internet protocols. Only packets that go across Network Block boundaries need Super Routing.
From the routing system point of view, a Super Gateway appears to be a hybrid of a host and a router. Except those connected to the Mother Block or Children Blocks, all Super Gateways within a Network Block will declare to nearby routers that they have paths leading to each other. When applicable, the Super Gateways linking Sister Groups will need to declare that they have paths leading to all Network Blocks in the Sister Group on the other side.
When a Start Point host needs to send a packet to the Endpoint host in a different Network Block, the former needs to ask the DNS Servers for the CNA of the latter, and then compare with its own CNA to extract the Block Addresses that the packet will need along the way.
The Start Point host will set the "Destination Address" as the first Block Address that the packet should pass. Since the Super Gateways are linked in the routing table, the Super Gateway that first receives this packet may or may not have a matching Block Address at its entry. If the entry Block Address does match the "Destination Address", then the later will be swapped with the next "should-pass" address stored in the ULIP option (which could be either the Endpoint host address or another Block Address); if not, then the packet is released into the other Network Block for another "trial delivery". Super Gateways will maintain the validity of the "Source Address" by swapping it properly.
When multiple Network Blocks exist, the method above will lead to more than one transmitting paths through different Network Blocks, as shown in Fig. 3. One of these transmitting paths is the shortest, and we call the other paths "Backup Paths". The larger the Block Group, the more Backup Paths we get. Thus the packet transmission between Network Blocks is similar to the regular routing process, but we call this process "Super Routing" because it cannot be performed by the routing system inside a Network Block.
If needed, some of the Backup Paths can be removed in routing tables for security concern. For example, a Backup Path that starts and ends within the same Autonomous System (AS) but going through an external Network Block should probably be removed. In order to avoid structural traffic crowding, Backup Paths between Children Blocks going through the Mother Block are forbidden.
According to data traffic and its own status, a Super Gateway can affect routing tables as if it is a regular router, thereby regulating the data flow among all transmitting paths. When the Network Blocks and the Super Gateways behave normal and there is no traffic crowding, the packets will be sent through the shortest transmitting path; but when crowding or malfunction occurs such that the supposed shorter path is temporarily longer, Super Gateways will adjust the routing tables, and Super Routing will redistribute the data flow naturally through the Backup Paths.
Super Routing also helps to connect the new Network Blocks to the Old Block. Before replying to a received message, a ULIP host resets the information inside the ULIP option, including reversing the sequences of the IP address table. But an IPv4 hosts in the Old Block would not do anything to the "unrecognized" ULIP option except copying it. Therefore, the Super Gateways connected to the Old Block must distinguish such packets and do the unfinished job for the IPv4 hosts. Thus, users of the new Network Blocks will be able to visit the websites in the Old Blocks. This has been the most difficult-to-solve problem that IPv6 has been facing for years.
Before the whole Old Block upgrades to ULIP, individual hosts in the Old Block can choose to upgrade and visit the websites in the new Network Blocks by manually input the CNA of the target. However, the IPv4 hosts that have not upgraded will not be able to visit the new Network Blocks. This will eventually push the Old Block to upgrade to ULIP.
Due to the bi-directional nature, the email communications between the Old Block and the new Network Blocks would be a problem before the Old Block email servers upgrade. One solution would be setting up ULIP-based "transmitting stations" in the Old Block to forward the emails in both directions.
(8) Proxy Super Gateway: the special gateway that is connected in parallel with a Super Gateway between two Network Blocks. The IP addresses on a Proxy Super Gateway should be from a reserved address pool, but are not Block Addresses. The two ports of a Proxy Super Gateway do not necessarily have different IP addresses. For each Super Gateway, there can be multiple Proxy Super Gateways which always declare in the routing tables that they lead to that Super Gateway with shortest distance. Proxy Super Gateways job is to "pretend to be" the Super Gateway that they serve by performing the same operations on packets, using the same pair of Block Addresses to identify themselves. When the Super Gateway being served declares paths to other Super Gateways to routers, the corresponding Proxy Super Gateways do same.
The purpose of Proxy Super Gateways is to share the data flow of the Super Gateway they serve, thereby boosting the speed and reliability of Super Routing. With Proxy Super Gateways in place, the Super Gateway or any of the Proxy Super Gateways can be shut down for maintenance or upgrades at any time.
(9) Routing Security Stamp: a 32-bit security code stored in the ULIP option. The Routing Security Stamp in a packet is usually stamped on and erased by the first and the last Super Gateway (or Proxy Super Gateway) that receive the packet; a packet goes through only one Super Gateway (or Proxy Super Gateway) will not be stamped. The Routing Security Stamp is meant to be used for preventing forged ULIP options, and is expected to be circulated only among the Super Gateways within an Autonomous System (AS); the Super Gateways on the border should erase the stamp. This invention does not include a specific design of the Routing Security Stamp.
The Routing Security Stamp can also be borrowed for enhancing the security of routing within one Network Block.
(10) Super Gateway Management Protocol (SGMP): a new protocol proposed for managing Super Gateways. This auxiliary protocol is also part of ULIP's security mechanism, and should be similar to the protocol for managing the routers. SGMP is expected to be used to manage only the Super Gateways within an Autonomous Systems (AS); the specifics of its design should not be shared with outside this scope, but the whole Internet can share a universal protocol ID for SGMP. This invention does not include a specific design of the protocol.
(11) Important servers shared by multiple Network Blocks: an important server can appear in different Network Blocks through multiple ports (network cards) on the same host, which can even be given the same IP address. Such an arrangement can shorten the visiting time delay for important servers, such as Domain Name Servers. But it must be understood that such servers actually have the status of Super Gateways. In order to prevent "information smuggling" channels, such servers should be carefully managed; all ports on a host of this kind of server should only be allowed in Network Blocks within the scope same as that for the Routing Security Stamp. For example, a server having ports connected to a new Network Block and the Old Block should not be allowed.
(12) The concepts and methods described above are not locked to the specific details of IPv4. For example, if the packet format differs from that of IPv4, or even if the IP address length is not 32 bit, these concepts and methods are still applicable for "duplicating" an existing network into one with linked Network Blocks.

### Description of Figures

Figure 1 shows the relationship between the port addresses of a Super Gateway and the Block Addresses of the two Network Blocks. The Super Gateway links two Network Blocks: A and D. The Super Gateway's port address in A is d, which is also the Block Address of D; the Super Gateway's port address in D is a, which is also the Block Address of A.

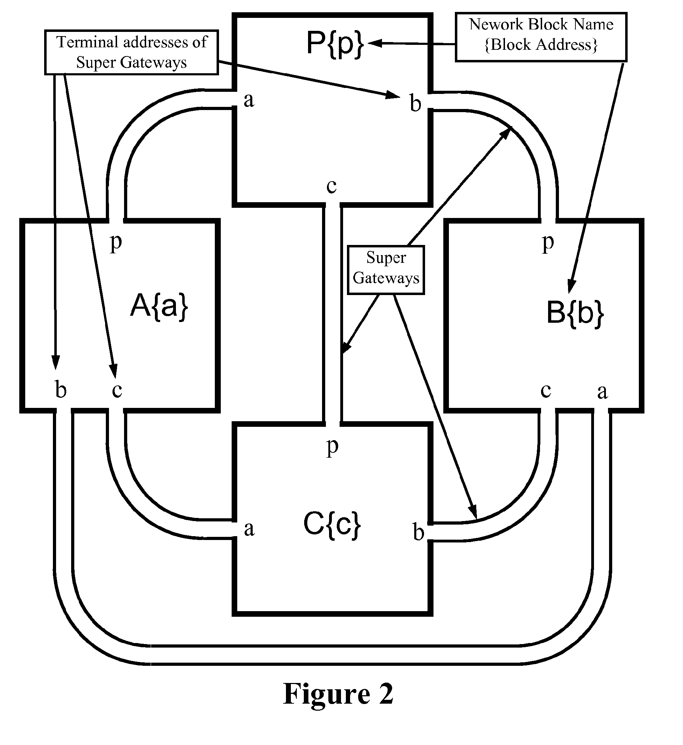

Figure 2 shows a new Internet made of 4 Network Blocks. It can be seen from Figure 2 that all Super Gateways connected to one Network Block share the same port address on the side not connected to this Network Block. This shared port address is the Block Address of this Network Block. For example, the Block Address of Network Block A is a; that of Network Block P is p, etc.
Figure 3 illustrates three of the usable paths for packet transmission in the Internet in Figure 2, from the host s in Network Block A to the server d in Network Block P. The path going from A directly into P is the shortest one, while the other two are Backup Paths.

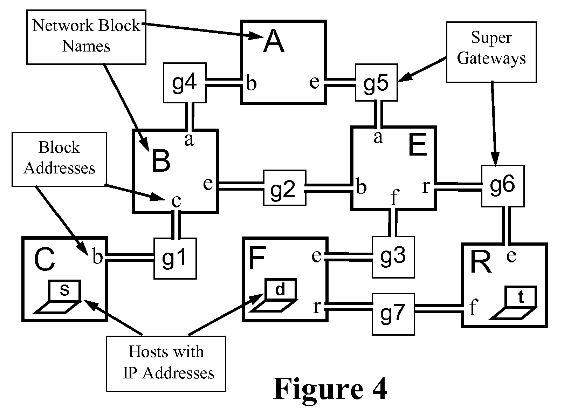

Figure 4 shows a new Internet made of six Network Blocks. Network Blocks A, B, and E (with Block Addresses a, b, e) are L2 Blocks; Network Blocks C, F, and R are L3 Blocks. C is a Child Block of B, while F and R are Children Blocks of E. Figure 4 is meant to demonstrate two examples (below) for compiling ULIP options.

The first example imaginable in Figure 4 is a packet being sent from address "s" in Network Block C to address "d" in Network Block F. The two CNAs needed for compiling the ULIP option are b:c:s and e:f:d. According to the rules set in Section 4 of "Specifics of Implementation" in this application document, "step (2)" should not erase any IP address because b≠e; thus "step (3)" receives an IP address pile "s:c:b:e:f:d". Now picking out from this pile: "s" in the highest level as the "Source Address" for IPv4 header, "b" in the third level as the "Destination Address". The remaining part of the pile "c:e:f:d" is to be the IP address table in the ULIP option. Therefore, the "maximum progress" should be 4+2=6. The compiled ULIP option is shown in Table 2.

**Table 2: Header components related to Super Routing, in a packet from (b:c:s) to (e:f:d)**

| | | | | | | | |
|---|---|---|---|---|---|---|---|
| IPv4 address | Source | s | | | | | |
| | Destination | b | | | | | |
| ULIP Option | Control Code | ULIP ID | Max Progress =6 | 00 | Traverse Count =0 | Progress =3 | |
| | Security Stamp | Initial value = 0 | | | | | |
| | IP Address Table | c | | | | | |
| | | e | | | | | |
| | | f | | | | | |
| | | d | | | | | |

The second example imaginable in Figure 4 is a packet being sent from address "t" in Network Block E to address "d" in Network Block F. The two CNAs are e:t and e:f:d. According to the rules, because "e:t" has two levels, one of the two highest level addresses ("e") is preserved, resulting a IP address pile "t:e:f:d". Picking out from this pile: "t" in the highest level as the "Source Address", "f" in the third level as the "Destination Address". The remaining part of the pile "e:d" is to be the IP address table in the ULIP option. Therefore, the "maximum progress" should be 2+2=4. The compiled ULIP option is shown in Table 3.

**Table 3: Header components related to Super Routing, in a packet from (e:t) to (e:f:d)**

| | | | | | | | |
|---|---|---|---|---|---|---|---|
| IPv4 address | Source | t | | | | | |
| | Destination | f | | | | | |
| ULIP Option | Control Code | ULIP ID | Max Progress =4 | 00 | Traverse Count =0 | Progress =3 | |
| | Security Stamp | Initial value = 0 | | | | | |
| | IP Address Table | e | | | | | |
| | | d | | | | | |

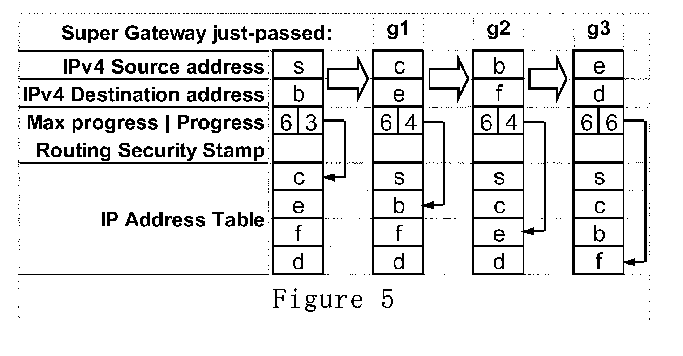

Figure 5 illustrates the evolution of the parameters listed in Table 2, as the packet in Figure 4's first example passing Super Gateways g1, g2, and g3 to reach its Endpoint. The arrows in Figure 5 are drawn from "progress" to the addresses that it points to.

### Implementation Specifics

1. Reserving Block Addresses and addresses for Proxy Super Gateways
   First of all, the implementation plan should be based on a realistic prediction of the scale the Internet could possibly reach in the future. Without breaking IPv4's header format, the maximum capacity (excluding Block Addresses) of the ULIP-based Internet can be 17 million times that of IPv6; but this is not practical because it would require one third of the IP addresses in the Old Block being Block Addresses. However, the maximum capacity would still exceed that of IPv6 even with the limitation of only 100 L2 Blocks. One more step back: without setting up L5 Blocks, the maximum capacity of all L3 and L4 Blocks below one L2 Block would be 2.9E+27, which translates into more than 5 trillion IP addresses per square meter on the Earth (including the polar areas and the oceans). It is unthinkable that we humans should need IP addresses even close to such a huge number. Therefore, setting up too many L2 Blocks should not be necessary.
   On the other hand, we believe that man kind's need for information flow will not exceed the processing and comprehension throughput of ourselves. Therefore, the demand for IP addresses should eventually saturate. Even if the global population reaches 20 billion, a 1000-IP-address-per-capita Internet can only fill up 5000 IPv4 Network Blocks; for a big country like China, 256 IP addresses for each of 500 million families would need about 30 Network Blocks; 1000 IP addresses for each of 1.6 billon people would translate into less than 400 Network Blocks.
   So the ULIP-based Internet is expected to have no more than a few hundreds L2 Blocks; the scale of L2 Block Group(s) would be dictated not by the demand for capacity, but by the demand for building network Autonomous System (AS). It should not be necessary to maximize the capacity of Network Blocks in any level, even the L4 Blocks may not be needed at all. The L2 Blocks will form the top level of the Internet.
   On the estimation of the demand of Proxy Super Gateways, two handy numbers for reference are the current optical fiber capacity between the U.S. and China, and the speed of top-class routers currently on the market: the former is 5120 Gb/s, while the latter is about 40Gb/s, such as Cisco's GRS-1. The ratio of the two is 128. Both data flow capacity and the hardware speed will go even higher, but the above ratio is not expected to change in order-of-magnitude. Therefore, it should be appropriate to reserve the capacity of a C-class subnet (256 IP addresses) for Proxy Super Gateways serving each Super Gateway. In order to cover the a few hundreds possible L2 Blocks, about 100,000 IP addresses should be reserved in the Old Block, for both the Block Addresses and the addresses of for Proxy Super Gateways. This does not appear to be a difficulty thing to do.
   Considering that the demand of communication between Network Blocks within each country will likely exceed that of the demand for international communication, it would be a good idea to reserve more addresses for Proxy Super Gateways in the new Network Blocks.
   In order to achieve the effect of dispersing dataflow, the addresses of Proxy Super Gateways serving the same Super Gateway should be picked from different subnets.
2. Deciding the Block Address for the Old Block
   The Block Address for the Old Block can be arbitrarily picked from those reserved for the L2 Block Addresses. As explained before, a Block Address is generally not decided by the Block itself but rather by other Network Blocks. So it is not necessary that the Old Block members reach a mutual consensus; the Old Block will naturally accept the choice by all new Network Blocks. Note that in every new Network Block, the Old Block Address should be assigned to the Super Gateways leading to the Old Block.
3. Block Addresses for new L2 Blocks
   Because every country is now a member of the Old Block, it would also be easy to decide the Block Addresses for the new Network Blocks. Each new Network Block simply pick one of the reserved L2 Block Addresses and give it to the Super Gateway's port connected in the Old Block.
4. Hosts
   The hosts will need to upgrade software to support ULIP. The hosts are responsible for compiling the ULIP option, and also process the ULIP option in received packets. The latter includes reversing the IP address table, and resetting the two parameters "progress" and "traverse count".
   In the ULIP option, the initial value of "traverse count" is 0, while that of "progress" is 3. The IP address table is compiled according to following rules (please refer to the examples in Figure 4's captions):
   (1) Put the CNA of the Start Point host and that of the Endpoint host side-by-side, with the L2 Block Address on top and aligned to each other.
   (2) Compare the two addresses in each layer from top down:
      - If the two differ, stop the comparison;
      - If the two are equal and both of the CNAs currently have 2 IP addresses left, then erase this level and stop the comparison;
      - If the two are equal but only one of the CNAs currently have 2 IP addresses left, then erase (any) one of the IP addresses in this level, and stop the comparison;
      - If the two are equal and both of the CNAs currently have more than 2 IP addresses left, then erase this level and go to the next level.
   (3) Take the remaining part of the Start Point CNA and reverse the sequence (such that the host IP address is on top), and then move the whole thing to stack on top of the remaining part of the Endpoint CNA to form a "IP address pile";
   (4) If there are only 2 IP addresses left in the "IP address pile" by now, then this packet is for communication within this Network Block, and the two IP addresses should be used as the "Source Address" and the "Destination Address". In such a case, the ULIP option can be omitted. In case the Network Block has enhanced the routing system and needs to use the "Routing Security Stamp", then it is okay to still keep the ULIP option and set both "maximum progress" and "progress" as 2;
   (5) If the packet is from a communication between two Network Blocks, then there would be at least 4 IP addresses in the "address pile". In this case, take away the third IP address from the top to use as the initial "Destination Address", and take the IP address on the top to use as the initial "Source Address". Then store the remaining part of the "address pile" as the "IP address table" in the ULIP option.
   The number of IP addresses in the "IP address table" must be even; adding 2 to it will get "maximum progress".
   In order to allow hosts easily upgrade to ULIP so as to communicate with outside their residential Network Blocks, upgrading packages should be made available for downloading by users in the new Network Blocks. These should include at least software patches for operating systems, application software (such as browsers, web servers, email, FTP, Telnet, etc), and domain name system software. The following work will have to be done to achieve the above goals:
   (1) Define a set of new Application Programming Interfaces (API);
   (2) Pick at least one flavor of Linux, a matching web server package such as Apache, and a domain name client/server package to upgrade to ULIP;
   (3) Write a WINSOCK function package based on the new API, to be used as a third-party upgrade patch for Microsoft Windows. Meanwhile, request Microsoft to support ULIP;
   (4) Pick at least one appropriate web browser and one email software, upgrade to support ULIP.
5. Super Gateways
   The Super Gateways need to have the functionality needed for processing ULIP options, including handling Routing Security Stamps. If the gateways on the market do not have enough programmability, then Linux workstations may be used to serve as Super Gateways at first, waiting for specially optimized hardware.
   The responsibilities of Super Gateways include:
   (1) Performing security check to the information stored in the ULIP option, including the Routing Security Stamp. Discard packets that are found unhealthy or over-age, and inform the Start Point host when necessary. Super Gateways on the border of an Autonomous System (AS) are also responsible of filtering packets for security.
   (2) "Complementary Super Routing" by Super Gateways linking the Old Block to new Network Blocks: checking a packets from the Old Block to identify sender hosts still using un-upgraded IPv4. If "Progress" equals "Max Progress" while the Block Address of the Old Block is at the bottom of the Address Table instead of being on top, then the Super Gateway can fix the packet header to comply with ULIP.
   (3) Address swapping at matching addresses: when "Destination" address matches the entry address of the Super Gateway, then first swap the "Source" address with the one pointed to by "Progress", increment "Progress" by 1, and then swap "Destination" address with the one pointed to by "Progress" (see Figure 5).
   (4) Routing Security Stamp operation: if the "Destination" address is one of the Block addresses after swapping, then: if "Traverse Count"=0, add Security Stamp to the header; if "Traverse Count">0, check the validity of the Security Stamp. If the "Destination" address is not a Block Address after swapping, then clear the Security Stamp. The Security Stamp should also be cleared if the Super Gateway is on the border of an Autonomous System (AS).
   (5) After all above operations, increase "Traverse Count" by 1 before releasing the packet.
   (6) Process data and instructions received through Super Gateway Management Protocol (SGMP); execute instructions received.
   Routing Security Stamp is meant to be the password shared by the Super Gateways within an Autonomous System (AS) for ensuing the truthfulness of the content of ULIP Option, this is why it should be cleared before crossing an AS border (unless two AS agree to share). A Super Gateway between two AS is usually made of two back-to-back Super Gateways independent of each other, using different Routing Security Stamps.
6. Routers and Routing System
   The routers in the new Network Blocks can be the mature IPv4 products (would have been made obsolete by IPv6) on the market. It is unnecessary to use the expensive and untested IPv6 compatible products. (This, of course, won't be the case in a new IPv6 Network Block.)
   The Routing protocols and software can be the same as what the Old Block currently uses. (It is possible to improve later in a new Network Block.)
7. Domain Name System (DNS)
   The domain name service system will have to change, but will not affect the operation of the Old Block. Two changes are necessary. One being the format for address reporting: a DNS server will need to report the CNS of the target host.
   The other change need is with the root name servers, which need to add a functionality of querying root servers in other Network Blocks. This makes a root DNS server behave temporarily like one with lesser authority, and can be implemented simply by using existing protocols.
   The current DNS system in the Old Block is a tree-like system, with the root DNS servers having the highest authority. Since the ULIP-based new internet has no center, it would be unlikely to create and maintain a global DNS server "tree". However, each Network Block can build its own DNS by simply copying the existing DNS system, forming a tree-like structure within. Each Network Block will have its own root DNS servers if necessary.
   Theoretically, it is still possible for one of the L2 Network Blocks to collect and store the DNS database in all other L2 Blocks; but in practice it would be a very heavy burden to maintain such a super database. Since name resolution for a Network Block is meaningful only if the Block can be reached for connection, it should be unnecessary to copy its DNS database; rather, the root DNS server in one Network Block should use a "delegate" query method to make use of its counterpart in the other Network Block. This way, the root DNS servers only need to locate the target Network Block for its customers. Thus, the root DNS servers in different L2 Blocks will often need to query each other.
   Upgrading the Old Block DNS servers maybe the only part that cannot be implemented right away: it will have to wait for the over-all upgrade of the Old Block. Before this occurs in the future, the Old Block DNS system will operate as usual, but cannot help users in the Old Block to access the new Network Blocks. The Old Block will upgrade only when the number of users visiting the new Network Blocks becomes large enough.
   If an Autonomous System (AS) contains multiple L2 Blocks, it would be a choice to make them share a set of root DNS servers. This will create a centralized DNS in the AS.
   Since the inter-Block DNS query is usually delegated, domain names from the second level downward will not have to be globally unified, so that the Network Blocks will be able to create the internal domain names at will. However, in order to simplify and speed up DNS query, the domain names inside a Network Block should still be designed to help identify the Network Block.
   With mutual agreement, multiple AS do have the choice to share a common network administration. In such a case, a widely shared and centralized DNS system can still be setup. Therefore, given the center-less nature of ULIP Internet, a center of the Internet can still form based on voluntary cooperation.
8. Domain Names
   Due to the easiness in setting up new Network Blocks, the desire to share a Network Block between countries should not be high. It is expected that the top-level domain names will represent countries or organizations with countries as members (such as the UN and EU). Other organizations that exist only in registered countries will have to be put below the corresponding top level domain names. It would be easiest to identify the Network Block from a country name; but if we keep some other top level domain names in the Old Block (such as com, edu, gov, org, net, etc.), then the DNS servers will have to do table lookup to determine which country an entity belongs to, thereby greatly increase the work load of the DNS system. Therefore, domain names such as com, edu, etc, should be lowered into second level in ULIP Internet; these domain names can be kept unchanged in the Old Block, only that they won't be recognized in the new Network Blocks. For DNS queries of target hosts inside one Network Block, the top level domain name can be omitted, so that the domain name change described above will be natural, without affecting the operation of the Old Block. To avoid double meaning, the country domain names existing in the Old Block should be left unchanged; new domain names representing countries should be set up for the new Network Blocks.
   For new Network Block users, the Old Block need to be labeled properly so that the websites inside can still be addressed by the new DNS. Some of the international organizations use the domain name "org", such as "www.un.org" should be placed under a better top level domain name "int", such as "www.un.org.int", to reflect the fact that they are not any country's internal organizations. For other Old Block websites that don't have country domain names, if kept unchanged, will become invisible from new Network Blocks. To fix this, the DNS database in new Network Blocks can first append "us" in front of their names, and modify later if the website requests.
9. Protocols for other TCP/IP layers, such as MAC, ARP, RARP, ICMP, etc. should be copied directly from the Old Block. However, packets for network administration instructions will be blocked by the Super Gateways on Autonomous System (AS) boundaries.
10. Future improvements inside a Network Block: the fact that ULIP Internet has natural boundaries gives network researchers an opportunity to experiment new ideas that have been difficult to do in the current internet. With the help of Super Gateways, new or improved protocols can be tested inside an experimental Network Block without cutting off the users to outside. Improvements proven as safe and effective can then be used for a larger scale experiments, say, within an Autonomous System (AS), and eventually spread into the whole internet. Over time, improved protocols that are safer and more reasonable will be generally accepted.
   Another issue worth solving is to enhance the routing security within a Network Block. In terms of functionality, the routing system is similar to the post office. Most of the businesses in the Europe and the US are private; yet the post offices are always run by the government. This is obviously for maintaining postal service neutrality. From this point of view, it should be inappropriate to allow the routing network owned by too many parties. In addition, a routing network should not be transparent to everyone: it should have an internal system to fend of possible intruders.
   A post office cannot be sure about the true origin of an envelope, yet the postal stamp does record the location and time frame the envelope enters the postal system; in comparison, the current routing system still does not have this very basic security mechanism. In order to ensure the security of packet delivery and the trustworthiness of network information, the routing system should form a seamless system within a Network Block, and should hook with the Super Gateways seamlessly. In fact, it would be best if the backbone of the routing network and the Super Gateways is managed by one unified organization. This way, the truthfulness of the data source can be ensured within the Autonomous System (AS).
   At the entry to the routing network, a data packet should be treated just like a postal envelope being stamped: its CNA needs to be verified as belonging to the current subnet; its ULIP Option, if exist, should be checked to make sure the Block Addresses are legitimate; and then a Routing Security Stamp should be put on (for intra-Block packets, can set "Max Progress"=2 to hold Security Stamp issued by the regular routing system) to register the entry point. A Post office does not discard an envelope with fake (or blank) sender address because the postal stamp can give information to the receiver; in the internet, however, it is practical to discard packets with fake addresses due to the low sending cost.
   If the routing system can be improved to have the above functionalities, we can consider changing the usage of the Routing Security Stamp. For example, it could be practical to use un-encrypted Routing Security Stamp to deliver useful information, such as routing path, to the receiver. If the routers are ready to use Routing Security Stamp in a new way, Super Gateways can change easy because we won't have too many of them.

## Claims

1. We propose a new network-layer protocol for expanding the IP address space of the Internet. This new protocol is a legitimate extension of IPv4 without rapturing the IPv4 framework. Same-sized duplicate(s) of the existing internet—each being called a Network Block—will be created; each Network Block will be assigned an identifying IP address called Block Address; a new IPv4 option will hold the IP addresses needed for addressing hosts in another Network Block; the Network Blocks will be connected to each other via Super Gateways, and data packets are delivered to their destination Network Blocks through Super Routing, which is a cooperation process of Super Gateways. By using this new protocol, new Network Blocks can be seamlessly connected to the existing Internet—which can be called the Old Block—without upgrading the routers; users of a new Network Block can visit the Old Block even before the latter upgrades to the new protocol, thereby resolving the IPv6 transition deadlock.
This new protocol can be called Ultra-Link Internet Protocol (ULIP), which is made of the following methods:
(1) Block Address: the entry address of a Network Block. Before a data packet entering a Network Block, the last IP address that it passes through is normally the Block Address of this Network Block. A data packet that starts and ends within the same Network Block will not go through any Block Address.
(2) Super Gateway: the special gateway that links two Network Blocks. The two ports of a Super Gateway must have different IP addresses: each of them must be the Block Address of the Network Block on the other side of the Super Gateway.
(3) Network Block Group: a cluster of Network Blocks among which all Network Blocks pairs are linked by Super Gateways. Low-traffic Super Gateways between two Network Block Groups can be omitted to reduce cost without cutting the connections.
(4) ULIP Option: a new IPv4 option. This is the only change that ULIP makes to the IPv4 header. The ULIP Option is used to store the IP addresses and other auxiliary information that a data packet needs when being sent between Network Blocks.
(5) Super Routing: the process that a data packet is sent across Network Blocks by cooperating Super Gateways.
(6) Proxy Super Gateway: a special gateway connected between two Network Blocks to serve the Super Gateway. A Proxy Super Gateway is the same as the Super Gateway it serves, except that its two ports are not given Block Addresses.
(7) Routing Security Stamp: a 32-bit code stored in the ULIP option, which is part of ULIP's security mechanism.
(8) Super Gateway Management Protocol (SGMP): an auxiliary protocol for managing Super Gateways.

2. Application of the methods summarized in claim 1 to a network-layer protocol using IP address of any length.

3. Application of the methods summarized in claim 1 to link Network Blocks with different IP address lengths. For example, integrating IPv4 Network Blocks and IPv6 Network Blocks into a hybrid Internet.
